**Europäisches Patentamt**

**European Patent Office**

**Office européen des brevets**

(11) Veröffentlichungsnummer: **0 331 865**
**A2**

# EUROPÄISCHE PATENTANMELDUNG

(21) Anmeldenummer: **89100235.4**

(22) Anmeldetag: **07.01.89**

(51) Int. Cl.⁴: **B62D 27/00 , B62D 33/00**

(30) Priorität: **10.03.88 DE 8803222 U**

(43) Veröffentlichungstag der Anmeldung:
**13.09.89 Patentblatt 89/37**

(84) Benannte Vertragsstaaten:
**AT BE CH DE ES FR GB GR IT LI LU NL SE**

(71) Anmelder: **VEREINIGTE ALUMINIUM-WERKE AKTIENGESELLSCHAFT**
**Georg-von-Boeselager-Strasse 25**
**D-5300 Bonn 1(DE)**

(72) Erfinder: **Bures, Wolfgang**
**Lindenstrasse 43**
**D-5205 St. Augstin 2(DE)**
Erfinder: **Griep, Winfried**
**Kirchfeld 1**
**D-5300 Bonn 3(DE)**

(74) Vertreter: **Müller-Wolff, Thomas, Dipl.-Ing.**
**c/o Vereinigte Aluminium-Werke AG**
**Patentabteilung Postfach 2468**
**D-5300 Bonn 1(DE)**

(54) Gerippe, insbesondere für Kofferaufbauten von LKW's, bestehend aus mehreren Profilverbindungen winklig zueinander angeordneter Einzelprofile.

(57) Gerippe, insbesondere für Kofferaufbauten von LKW's, bestehend aus mehreren Profilverbindungen winklig zueinander angeordneter Einzelprofile.

Es soll ein Gerippe, insbesondere für Kofferaufbauten von LKW's, aus mehreren Profilverbindungen entwickelt werden, wobei die Einzelprofile in einem Winkel bis zu 10° zur Mittelachse an der Anschlußstelle geneigt angeordnet sein können. Damit soll der Aufbau von nichtrechtwinkligen Fachwerken ermöglicht werden.

Das Gerippe besteht aus mehreren Profilverbindungen winklig zueinander angeordneter Einzelprofile, die zur Anschlußseite hin als U-Profile ausgebildet sind. In die U-Profile des einen Einzelprofils wird mindestens ein Eckwinkel eingeführt, an dem ein weiteres Einzelprofil befestigt ist, und zwar in einer Weise, daß zwischen den beiden Schenkeln des U-Profils (1, 2) eine zur U-Mündung hin geöffnete Halbschale (8) angeordnet ist, die zur U-Basis hin mindestens einen Durchbruch (9) aufweist. In den Zwischenraum zwischen Halbschale (8) und U-Basis ist ein Gewindestück (5) mit einer zur Halbschale (8) hin gekrümmten Kontaktfläche (10) in den Durchbruch (9) gesteckt und von der Gegenseite in die Halbschale ist ein ballig ausgebildeter Eckwinkel (3) eingesetzt, der mit dem Gewindestück (5) verschraubt ist.

Das Gerippe kann insbesondere für Kofferaufbauten von LKW's verwendet werden.

Fig 6

## Gerippe, insbesondere für Kofferaufbauten von LKW's, bestehend aus mehreren Profilverbindungen winklig zueinander angeordneter Einzelprofile.

Die Erfindung betrifft ein Gerippe, insbesondere für Kofferaufbauten von LKW's, bestehend aus mehreren Profilverbindungen winklig zueinander angeordneter Einzelprofile, die zur Anschlußseite hin als U-Profile ausgebildet sind, wobei in die U-Profile des einen Einzelprofils mindestens ein Eckwinkel eingeführt wird, an dem ein weiteres Einzelprofil befestigt ist.

Ein Gerippe der eingangs genannten Art ist aus der DE-OS 34 46 734 bekannt. Dabei werden die Eckwinkel über Schwalbenschwanzführungen mit den Einzelprofilen verbunden, so daß eine rechtwinklig angeordnete Kastenkonstruktion mit Außen- und Innengerippe entsteht.

Aufgabe der vorliegenden Erfindung ist es, ein Gerippe, insbesondere für Kofferaufbauten von LKW's aus mehreren Profilverbindungen herzustellen, wobei die Einzelprofile in einem Winkel bis zu 10° zur Mittelachse an der Anschlußstelle geneigt angeordnet werden können. Damit soll der Aufbau von nichtrechtwinkligen Fachwerken ermöglicht werden.

Die Aufgabe wird durch die in den Schutzansprüchen angegebenen Merkmale gelöst. Das erfindungsgemäße Gerippe beinhaltet die Verwendung von Einzelprofilen 1, 2, die zur Anschlußseite hin als U-Profile ausgebildet sind, wobei zwischen den beiden Schenkeln des U-Profils eine zur U-Mündung hin geöffnete Halbschale angeordnet ist, die auch als Kalotte bezeichnet werden kann. Zur Basis des U-Profils hin weist die Kalotte mindestens einen Durchbruch auf, in den ein Gewindestück 5 eingeschoben ist, das mit seinem Kopfteil im Raum zwischen Halbschale und Basis angeordnet ist und mit einer halbschalenförmigen Kontaktfläche auf der Halbschale schwenkbar ist. Ein entsprechend der Halbschale ballig ausgebildeter Eckwinkel ist von der U-Mündung her in die Kalotte eingeführt und mit dem Gewindestück 5 verschraubt.

Im folgenden wird die Erfindung anhand mehrerer Ausführungsbeispiele näher erläutert. Es zeigen:

Fig. 1 = Ansicht eines Teilbereichs des erfindungsgemäßen Gerippes,

Fig. 2 = Querschnitt entlang AA gem. Fig. 1,

Fig. 3 = Querschnitt entlang BB entsprechend Fig. 2,

Fig. 4 = Querschnitt gem. Fig. 3 mit einem um den Winkel α geschwenkten Anschlußprofil,

Fig. 5 = Erfindungsgemäßer Eckwinkel,

Fig. 6 = Perspektivische Ansicht eines erfindungsgemäßen Mehrfachanschlusses,

Fig. 7 = Längsschnitt durch eine erfindungsgemäße Profilverbindung mit doppeltem U-Profil.

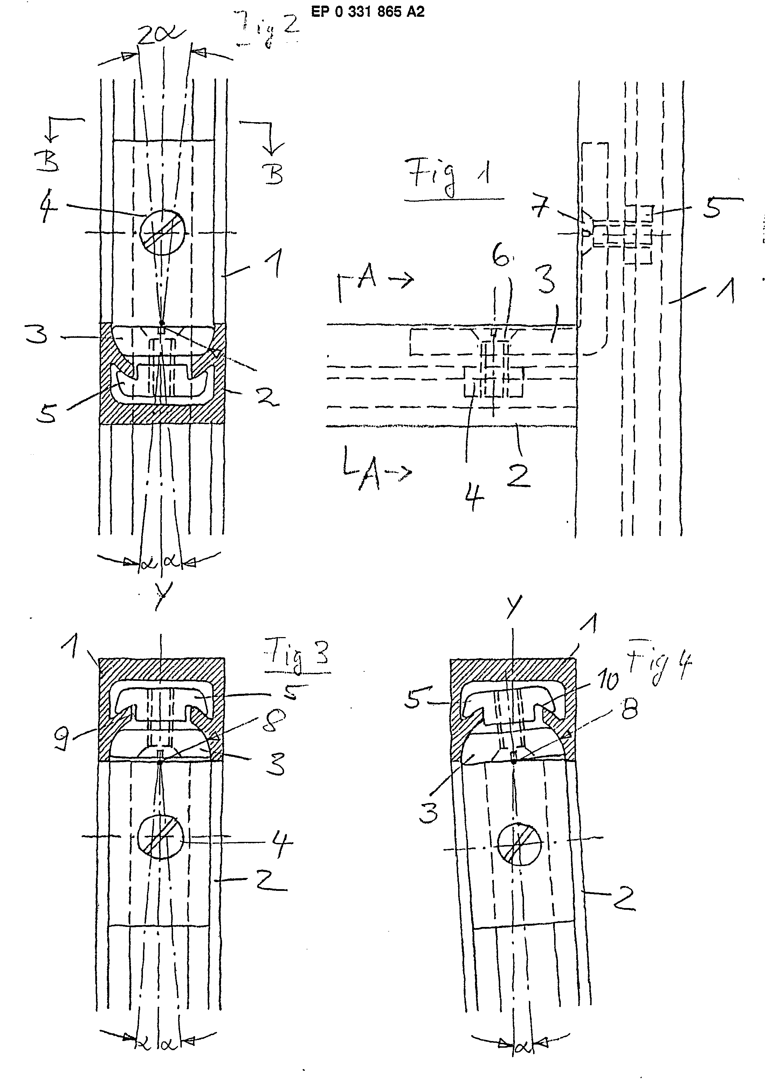

In Figur 1 sind die Einzelprofile mit 1, 2, der Eckwinkel mit 3, die Gewindestücke 4, 5 und die Schrauben mit 6, 7 bezeichnet.

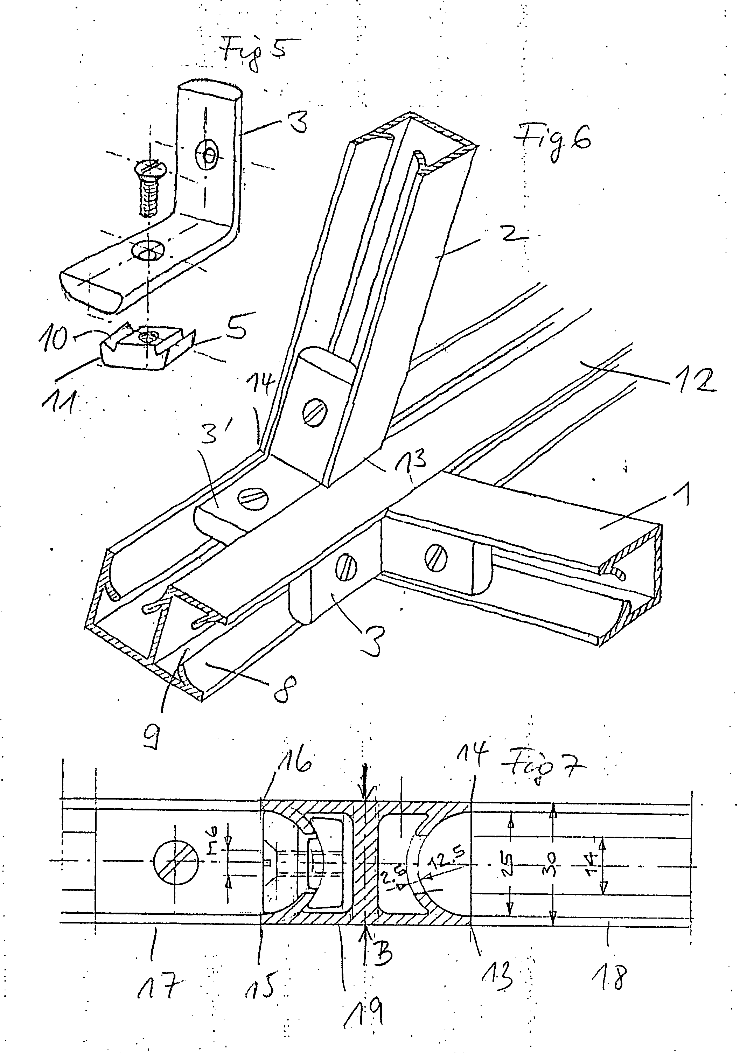

In Figur 2 ist zusätzlich der Winkel α eingezeichnet, um den das Einzelprofil 1 schwenkbar ist. Er liegt zwischen 0 und 10° bezogen auf die Mittelachse Y der Halbschale 8.

In Figur 3 ist zusätzlich die Halbschale 8 und der Durchbruch 9 angegeben, in den das Gewindestück eingreift.

In Figur 4 ist das Gewindestück 5 zusammen mit dem Eckwinkel 3 um etwa 8° zur Mittelachse Y des Einzelprofils 1 geschwenkt. Man erkennt, daß dabei das Gewindestück 5 mit seiner Kontaktfläche 10 auf einer kalottenförmigen Halbschale gleitet.

In Figur 5 ist der Eckwinkel 3 mit einer Verschraubung incl. Gewindestück 5 dargestellt. Das Gewindestück 5 hat eine Schmalseite 11, die in den Durchbruch 9 eingeführt und gedreht wird, so daß die Kontaktflächen 10 mit der Halbschale 8 in Berührung kommen.

In Figur 6 ist das Einzelprofil 1 mit den weiteren Profilen 2, 12 über die erfindungsgemäßen Eckwinkel 3, 3' verbunden. Man erkennt, daß die Einzelprofile 1, 2, 12 zur Anschlußseite hin als U-Profil ausgebildet sind, wobei beim Einzelprofil 12 zwei U-Profile zu einem Mehrfachanschluß aneinandergefügt sind. Bei einem schräg angesetzten Einzelprofil 1 muß die Anschlußschnittstelle dem Winkel α entsprechen, damit eine beidseitige Anlage an den Stoßlinien 13, 14 gebildet wird.

Die Größe des Winkels, um den das Profil schwenkbar ist, hängt von der Breite B des U-Profils und der Weiter W des Durchbruches 9 ab. Wichtig ist, daß die Stoßflächen 13, 14, 15 und 16 zwischen den Einzelprofile 17, 18, 19 voll abgedeckt sind, damit die Profilverbindung einen sicheren Halt hat.

Das erfindungsgemäße Gerippe kann in vorteilhafter Weise bei Kofferaufbauten von LKW's eingesetzt werden, die mit ihren schräg geneigten Seitenwänden an die Kontur des Fahrerhauses angepaßt werden müssen. In gleicher Weise sind aber auch Container für Spezialzwecke in Stauräumen mit abgeschrägten Seitenwänden vorteilhaft an die Umgebung anzupassen.

Ein weiteres Anwendungsgebiet für das erfindungsgemäße Gerippe besteht in der Ausbildung von Regalwänden, die in nichtrechtwinkligen Fachträumen, wie z.B. in Flugzeugen, Schiffen oder Kraftfahrzeugen angebracht werden müssen. Hier bietet das erfindungsgemäße System durch schwenkbarer Anordnung eine flexible Anpassungsmöglichkeit an verschiedene Frachtraumkonstruktionen.

## Ansprüche

1. Gerippe, insbesondere für Kofferaufbauten von LKW's, bestehend aus mehreren Profilverbindungen winklig zueinander angeordneter Einzelprofile, die zur Anschlußseite hin als U-Profile ausgebildet sind, wobei in die U-Profile des einen Einzelprofils mindestens ein Eckwinkel eingeführt wird, an dem ein weiteres Einzelprofil befestigt ist, dadurch gekennzeichnet, daß zwischen den beiden Schenkeln des U-Profils (1, 2) eine zur U-Mündung hin geöffnete Halbschale (8) angeordnet ist, die zur U-Basis hin mindestens einen Durchbruch (9) aufweist,
in den Zwischenraum zwischen Halbschale (8) und U-Basis ein Gewindestück (5) mit einer zur Halbschale (8) hin gekrümmten Kontaktfläche (10) in den Durchbruch (9) gesteckt ist und von der Gegenseite in die Halbschale ein ballig ausgebildeter Eckwinkel (3) eingesetzt ist, der mit dem Gewindestück (5) verschraubt ist.

2. Gerippe nach Anspruch 1, dadurch gekennzeichnet, daß bei einem Mehrfachanschluß, z.B. bei einem T- oder Kreuzstück, die U-Profile zur Anschlußseite hin verdoppelt, verdreifacht oder vervielfacht sind.

3. Gerippe nach einem der vorhergehenden Ansprüche, dadurch gekennzeichnet, daß der Durchbruch (9) in der Halbschale [8] über die gesamte Profillänge ausgebildet ist.

4. Gerippe nach einem der vorhergehenden Ansprüche, dadurch gekennzeichnet, daß die Einzelprofile (1, 2) in bezug auf die Mittelachse Y der Halbschale (8) um einen Winkel $\alpha$ zwischen 0 und 10 ° geneigt sind.

5. Gerippe nach einem der vorhergehenden Ansprüche, dadurch gekennzeichnet, daß die Einzelprofile, Gewindestücke und Eckwinkel aus Aluminium, vorzugsweise einer AlMgSi-Legierung bestehen.

EP 0 331 865 A2

Fig 2

Fig 1

Fig 3

Fig 4

Fig 5

Fig 6

Fig 7